# EUROPÄISCHE PATENTSCHRIFT

(11) **EP 1 406 963 B1**
(45) Veröffentlichungstag und Bekanntmachung des Hinweises auf die Patenterteilung: **02.01.2008**
(21) Anmeldenummer: 02751057.7
(22) Anmeldetag: 21.06.2002
(51) Int. Cl.: C08K 5/42, C08L 27/02

(54) **VERWENDUNG VON FLUORALKANSULFONSÄUREN ZUR STABILISIERUNG VON CHLORHALTIGEN ORGANISCHEN KUNSTSTOFFEN**
USE OF FLUOROALKANE SULFONIC ACIDS FOR STABILISING ORGANIC PLASTICS CONTAINING CHLORINE
UTILISATION D'ACIDES FLUOROALCANE-SULFONIQUES POUR STABILISER DES PLASTIQUES ORGANIQUES CHLORE

(30) Priorität: 30.06.2001 DE 10131764
(43) Veröffentlichungstag der Anmeldung: 14.04.2004
(73) Patentinhaber: Reagens Deutschland GmbH, 49393 Lohne (DE)
(72) Erfinder: DAUTE, Peter, 27616 Beverstedt (DE); KLAMANN, Jörg-Dieter, Alderley,QLD 4051 (AU); MARKS, Dieter, 27612 Loxstedt (DE)
(74) Vertreter: Weisgerber, Stefan
(86) Internationale Anmeldenummer: PCT/EP2002/006887
(87) Internationale Veröffentlichungsnummer: WO 2003/004558

(56) Entgegenhaltungen:
- EP-A- 0 357 354
- WO-A-94/10113
- WO-A-98/23686
- DE-A- 19 943 637
- FR-A- 1 298 572
- US-A- 3 154 519
- DATABASE CA [Online] CHEMICAL ABSTRACTS SERVICE, COLUMBUS, OHIO, US; SAKAMOTO, YOSHITO: "Fluoropolymer-fluororubber compositions" retrieved from STN Database accession no. 113:232849 XP002223051 & JP 02 189354 A (SUMITOMO ELECTRIC INDUSTRIES, LTD., JAPAN) 25. Juli 1990 (1990-07-25)
- DATABASE CA [Online] CHEMICAL ABSTRACTS SERVICE, COLUMBUS, OHIO, US; SHIMIZU, TOSHIHIDE ET AL: "Scale inhibitors for vinyl polymers" retrieved from STN Database accession no. 109:232090 XP002223052 & JP 63 175002 A (SHIN-ETSU CHEMICAL INDUSTRY CO., LTD., JAPAN) 19. Juli 1988 (1988-07-19)

## Beschreibung

### Gebiet der Erfindung

Die Erfindung betrifft die Verwendung von Fluoralkansulfonsäuren zur Stabilisierung von chlorhaltigen organischen Kunststoffen.

### Stand der Technik

Halogenhaltige Kunststoffe oder daraus hergestellte Formmassen neigen bekanntermaßen zu Abbau- beziehungsweise Zersetzungsreaktionen, wenn sie thermischer Belastung ausgesetzt sind oder mit energiereicher Strahlung, zum Beispiel Ultraviolettlicht, in Kontakt kommen.

Zur Stabilisierung von PVC bei der Verarbeitung werden meist metallhaltige Stabilisatoren auf Basis von Pb, Ba, Cd, Sn, Ca und Zn eingesetzt. Bereits 1940 wurden Harnstoffderivate wie z.B. Diphenylthioharnstoff zur Stabilisierung von PVC vorgeschlagen (vergleiche: Gächter/Müller, "Kunststoff-Additive", Carl Hanser Verlag 1989, S 312**)** Diese Verbindungen werden meist in Kombination mit metallhaltigen Stabilisatoren eingesetzt, da sie alleine in aller Regel keine ausreichende Langzeitstabilisierung ergeben.

### Beschreibung der Erfindung

Aufgabe der vorliegenden Erfindung war es, Substanzen bereitzustellen, die sich zur Stabilisierung von chlorhaltigen organischen Kunststoffen, insbesondere PVC, gegen thermischen und/oder photochemischen Abbau auszeichnen.

Gegenstand der vorliegenden Erfindung ist die **Verwendung** von Fluoralkansulfonsäuren zur Stabilisierung von chlorhaltigen organischen Kunststoffen gegen thermischen und/oder photochemischen Abbau.

Unter Fluoralkansulfonsäuren werden im Rahmen der vorliegenden Erfindung organische Sulfonsäuren verstanden, die mindestens ein Fluoratom pro Molekül aufweisen. Vorzugsweise haben die erfindungsgemäß einzusetzenden Fluoralkansulfonsäuren eine Sulfonsäuregruppe pro Molekül. Weiterhin sind solche Fluoralkansulfonsäuren bevorzugt, die 1 bis 18 C-Atome pro Molekül enthalten. Ganz besonders bevorzugt sind vollständig fluorierte Alkansulfonsäuren mit 1 bis 18 C-Atomen pro Molekül. Die Fluoralkansulfonsäuren können als solche oder in Form ihrer Salze eingesetzt werden, wobei die Alkalimetallsalze bevorzugt sind. Der Begriff "Fluoralkansulfonsäuren" umfaßt demnach im Rahmen der vorliegenden Anmeldung sowohl die Fluoralkansulfonsäuren als solche, als auch deren Salze.

Beispiele für geeignete Fluoralkansulfonsäuren sind Trifluormethansulfonsäure, Perfluorethansulfonsäure, Perfluoroctansulfonsäure.

Die Fluoralkansulfonsäuren und deren Salze können einzeln oder im Gemisch untereinander eingesetzt werden. Ganz besonders bevorzugt ist es, Trifluormethansulfonssäure oder deren Salze einzusetzen.

Vorzugsweise werden die Fluoralkansulfonsäuren in Form von deren Salzen, insbesondere deren Alkalimetallsalzen, eingesetzt. Dabei sind wiederum die Lithium-, Natrium- und Kaliumsalze bevorzugt.

Die Fluoralkansulfonsäuren werden zur Stabilisierung chlorhaltiger organischer Kunststoffe, insbesondere PVC, in Menge von 0,001 bis 2 phr und insbesondere 0,01 bis 0,5 phr eingesetzt. Der dem Fachmann geläufige Ausdruck phr ("parts per hundred resin") gibt an, wieviele Gewichtsteile der Komponente im Kunststoff - bezogen auf 100 Gewichtsteile Kunststoff - vorhanden sind.

Ein weiterer Erfindungsgegenstand sind **Stabilisatorzusammensetzungen** zur Stabilisierung von chlorhaltigen organischen Kunststoffen gegen thermischen und/oder photochemischen Abbau, dadurch gekennzeichnet, daß diese Zusammensetzungen ein oder mehrere Fluoralkansulfonsäuren enthalten. Bezüglich der Natur der Fluoralkansulfonsäuren und deren bevorzugte Varianten sei auf das oben bereits Ausgeführte verwiesen.

In einer Ausführungsform enthalten die erfindungsgemäßen Stabilisatorzusammensetzungen, weiterhin ein oder mehrere Kunststoff-**Additive,** die ausgewählt sind aus der Gruppe der
(d1) Cyanacetylharnstoffe,
(d2) Aminouracile,
(d3) Perchlorate,
(d4) Zeolithe,
(d5) kationischen Schichtverbindungen,
(d6) CHAP-Verbindungen,
(d7) Katoite,
(d8) Glycidyl-Verbindungen,
(d9) beta-Diketone und beta-Ketoester,
(d10) Dihydropyridine und Polydihydropyridine,
(d11) Polyole und Disaccharidalkohole,
(d12) sterisch gehinderte Amine (Tetraalkylpiperidinverbindungen),
(d13) Alkalialumocarbonate (Dawsonite),
(d14) Alkali- und Erdalkaliverbindungen,
(d15) Antioxidantien,
(d16) Trenn - und/oder Gleitmittel,
(d17) Weichmacher,
(d18) Pigmente,
(d19) Füllstoffe,
(d20) Phosphite,
(d21) Thiophosphite und Thiophosphate,
(d22) Mercaptocarbonsäureester,
(d23) Epoxidierte Fettsäureester,
(d24) UV-Absorber und Lichtschutzmittel,
(d25) Treibmittel,
(d26) Harnstoff,
(d27) Metallseifen
(d28) Antistatika.

Die Verbindungen der Klassen (d1) bis (d28) sind dem Fachmann als Additive für halogenhaltige Kunststoffe, insbesondere PVC, wohlbekannt. Für repräsentative Beispiele von Substanzen aus diesen Klassen sei beispielhaft auf die eingangs zitierte EP-A-768 336 verwiesen.

In Zusammenhang mit dem Gebrauch des Begriffs "Additiv" für die Verbindungen der Klasse (d1) bis (d28) sei darauf hingewiesen, daß der Fachmann auf dem Gebiet der Kunststoffverarbeitung Additive sowohl unter strukturellen als auch unter funktionellen Gesichtspunkten klassifiziert.

Bei funktioneller Klassifizierung sind typische Kunststoffadditive: Antistatika, Antischleiermittel, Antioxidantien, UV-Stabilisatoren, Haftmittel, Kalandrierhilfen, Formtrennmittel, Gleitmittel, Trennmittel, Schmiermittel, Weichmacher, Duftmittel, Flammschutzmittel, Füllstoffe, Pigmente, Treibmittel, Mittel zur Erhöhung der Thermostabilität (Thermostabilisatoren).

Die oben genannten Additivklassen (d1) bis (d28) folgen weitgehend der strukturellen Klassifizierung, d.h. der Klassifizierung hinsichtlich der chemischen Struktur. Bei einigen Klassen wurde jedoch die funktionelle Definition vorgezogen.

Es sei weiterhin darauf hingewiesen, daß Verbindungen einer bestimmten Stoffklasse, mithin Verbindungen die unter strukturellen Gesichtspunkten derselben Klasse zugeordnet werden können, in der Praxis häufig nicht nur eine Funktion erfüllen, sondern zwei oder mehrere. So können beispielsweise Calciumseifen als Gleit- und/oder Trennmittel wirken, sie können aber auch - etwa bei der Verarbeitung des Kunststoffes Polyvinylchlorid (PVC) - als Mittel zur Verbesserung der Thermostabilität dienen.

### Zu den Verbindungen der Gruppen d1) bis d28)

Bei den **Verbindungen d1)** handelt es sich um **Cyanacetylharnstoffe.** Dies sind dem Fachmann bekannte Substanzen, die durch die Formel (D-1) gekennzeichnet sind

NC-CH₂-CO-N(R¹)-CO-NH-R² (D-1)

worin die Reste R¹ und R² unabhängig voneinander jeweils einen unverzweigten oder verzweigten, linearen oder cyclischen Alkylrest mit 1 bis 18 C-Atomen oder einen Arylrest mit 6 bis 18 C-Atomen, der gegebenenfalls durch ein oder mehrere Alkylreste mit jeweils 1 bis 6 C-Atomen substituiert sein kann, bedeuten. Im Rahmen der vorliegenden Erfindung ist N,N'-Dimethyl-N-cyanacetylharnstoff besonders bevorzugt; bei dieser Verbindung bedeuten die Reste R¹ und R² in der Formel (D-1) jeweils eine Methylgruppe.

Bei den **Verbindungen d2)** handelt es sich um Aminouracile; diese sind durch die Formel (D-2) 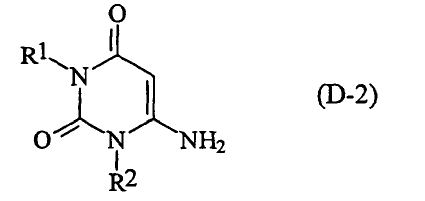 gekennzeichnet, worin die Reste R¹ und R² unabhängig voneinander jeweils Wasserstoff oder einen unverzweigten oder verzweigten, linearen oder cyclischen Alkylrest mit 1 bis 18 C-Atomen oder einen Arylrest mit 6 bis 18 C-Atomen, der gegebenenfalls durch ein oder mehrere Alkylreste mit jeweils 1 bis 6 C-Atomen substituiert sein kann, bedeuten. Dimethylaminouracil (D-2*) ist dabei ganz besonders bevorzugt.

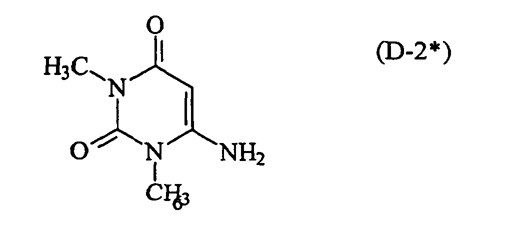

Bei den **Verbindungen d3)** handelt es sich um **Perchlorate.** Unter Perchloraten im Sinne der Erfindung sind Metallsalze und Ammoniumsalze der Perchlorsäure zu verstehen. Beispiele für erfindungsgemäß geeignete Perchlorate sind diejenigen der Formel M(ClO₄)ₙ, wobei M insbesondere für Ammonium, Li, Na, K, Mg, Ca, Sr, Zn, Al, La oder Ce steht. Der Index n ist entsprechend der Wertigkeit des Kations M 1, 2 oder 3.
Die Perchloratsalze können mit Alkoholen, etwa Polyolen, Cyclodextrinen, oder Ätheralkoholen bzw. Esteralkoholen komplexiert oder darin gelöst sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri-, Tetra- und Polyglycole, sowie Di-, Tri- und Tetrapentaerythrit oder Polyvinylalkohol in verschiedenen Polymerisationsgraden. Im Hinblick auf Perchlorat-Alkohol-Komplexe seien ausdrücklich die dem Fachmann aus EP-B-394 547**,** Seite 3, Zeilen 37 bis 56 bekannten Typen miteinbezogen.
Die Perchloratsalze können in verschiedenen gängigen Darreichungsformen eingesetzt werden, zum Beispiel als Salz oder Lösung in Wasser oder einem organischen Solvens als solches, bzw. aufgezogen auf ein Trägermaterial wie PVC, Ca-Silikat, Zeolithe oder Hydrotalcite, oder eingebunden durch chemische Reaktion in einen Hydrotalcit oder eine andere Schichtgitterverbindung. Als Polyolpartialether sind Glycerinmonoether und Glycerinmonothioether bevorzugt.
Die Perchlorate können sowohl einzeln als auch im Gemisch untereinander eingesetzt werden.

Bei den **Verbindungen d4)** handelt es sich um **Zeolithe**. Zeolithe sind - wie dem Fachmann bekannt - Alkali bzw. Erdalkalialumosilikate. Sie können durch die allgemeine Formel (D-4)

M_{x/n}[(AlO₂)ₓ(SiO₂)_{y}]·wH₂O (D-4)

beschrieben werden, worin
- n die Ladung des Kations M;
- M ein Element der ersten oder zweiten Hauptgruppe, wie Li, Na, K, Mg, Ca, Sr oder Ba;
- y:x eine Zahl von 0,8 bis 15, bevorzugt von 0,8 bis 1,2; und
- w eine Zahl von 0 bis 300, bevorzugt von 0,5 bis 30, ist.

Beispiele für Zeolithe sind Natriumalumosilikate der Formeln
Na₁₂ Al₁₂Si₁₂O₄₈. 27 H₂O [Zeolith A],
Na₆Al₆Si₆O₂₄. 2 NaX. 7,5 H₂O, X=OH, Halogen, ClO₄[Sodalith];
Na₆Al₆Si₃₀O₇₂. 24 H₂O;
Na₈Al₈Si₄₀O₉₆. 24 H₂O;
Na₁₆ Al₁₆Si₂₄O₈₀. 16 H₂O;
Na₁₆ Al₁₆Si₃₂O₉₆. 16 H₂O;
Na₅₆Al₅₆Si₁₃₆O₃₈₄. 250 H₂O [Zeolith Y],
Na₈₆Al₈₆Si₁₀₆O₃₈₄. 264 H₂O [Zeolith X];
oder die durch teilweisen bzw. vollständigen Austausch der Na-Atome durch Li-, K-, Mg-, Ca-, Sr- oder Zn-Atome darstellbaren Zeolithe wie
(Na,K)₁₀Al₁₀Si₂₂O₆₄. 20 H₂O;
Ca_{4,5}Na₃ [(AlO₂)₁₂(S1O₂)₁₂].30H₂O;
K₉Na₃[(AlO₂)₁₂(SiO₂)₁₂]. 27 H₂O.

Bevorzugte Zeolithe entsprechen den Formeln
Na₁₂Al₁₂Si₁₂O₄₈. 27 H₂O [Zeolith A],
Na₆Al₆Si₆O₂₄. 2NaX . 7,5 H₂O, X = OH, Cl, ClO₄, 1/2CO₃[Sodalith]
N8₆Al₆Si₃₀ O₇₂. 24 H₂O,
Na₈Al₈Si₄₀ O₉₆. 24 H₂O,
Na₁₆Al₁₆Si₂₄O₈₀.16H₂O,
Na₁₆Al₁₆Si₃₂O₉₆. 16 H₂O,
Na₅₆Al₅₆Si₁₃₆O₃₈₄. 250 H₂O, [Zeolith Y]
Na₈₆Al₈₆Si₁₀₆O₃₈₄. 264 H₂O [Zeolith X]
und solche X- und Y-Zeolithe mit einem A1/ Si-Verhältnis von ca. 1:1 oder die durch teilweisen bzw. vollständigen Austausch der Na-Atome durch Li-, K-, Mg-, Ca- , Sr-, Ba- oder Zn-Atome darstellbaren Zeolithe wie
(Na,K)₁₀Al₁₀Si₂₂O₆₄. 20 H₂O.
Ca_{4,5}Na₃[(AlO₂)₁₂(SiO₂)₁₂]. 30 H₂O
K₉Na₃[(AlO₂)₁₂(SiO₂)₁₂]. 27 H₂O

Die angeführten Zeolithe können auch wasserärmer bzw. wasserfrei sein. Weitere geeigente Zeolithe sind:
Na₂O·Al₂O₃·(2 bis 5) SiO₂·(3,5 bis 10) H₂O [Zeolith P]
Na₂O·Al₂O₃·2 SiO₂·(3.5-10)H₂O (Zeolith MAP)
oder die durch teilweisen bzw. vollständigen Austausch der Na-Atome durch Li-, K- oder H-Atome darstellbaren Zeolithe wie
(Li,Na,K,H)₁₀Al₁₀ Si₂₂O₆₄. 20 H₂O.
K₉Na₃[(AlO₂)₁₂(SiO₂)₁₂]. 27 H₂O
K₄Al₄Si₁₄O₁₆.6H₂O [Zeolith K-F]
Na₈Al₈Si₄₀O₉₆.24 H₂O Zeolith D, wie in Barrer et al.. J. Chem. Soc. 1952, 1561-71, und in US 2,950,952 beschrieben.

### Ferner kommen folgende Zeolithe in Frage:

K-Offretit, Zeolith R, Zeolith LZ-217, Ca-freier Zeolith LZ-218, Zeolith T, Zeolith LZ-220, Na₃ K₆Al₉Si₂₇O₇₂.21 H₂O [Zeolith L]; Zeolith LZ-211, Zeolith LZ-212, Zeolith O, Zeolith LZ-217, Zeolith LZ-219, Zeolith Rho, Zeolith LZ-214, Zeolith ZK-19, Zeolith W (K-M), Na₃₀Al₃₀Si₆₆O₁₉₂. 98 H₂O [Zeolith ZK-5, Zeolith Q]. Hinsichtlich dieser Zeolith-Typen sei ausdrücklich auf die EP-A 768 336 und die dort zitierte Literatur verwiesen (vergliche EP-A 768 336 Seite 26, Zeilen 40 bis 54).

Besonders bevorzugt werden Zeolith P Typen der Formel II eigesetzt, worin x eine Zahl im Bereich von 2 bis 5 und y eine Zahl im Bereich von 3.5 bis 10 sind. Ganz besonders eignen sich Zeolith MAP der Formel II, worin x die Zahl 2 und y eine Zahl im Bereich von 3.5 bis 10 sind. Insbesondere handelt es sich um Zeolith Na-P, d.h. M steht für Na. Dieser Zeolith tritt im allgemeinen in den Varianten Na-P-1, NaP-2 und Na-P-3 auf, die sich durch ihre kubische, tetragonale oder orthorhombische Struktur unterscheiden (vergleiche EP-A 768 336, den die Seiten 26 und 27 überbrückenden Absatz).

Im Rahmen der Erfindung lassen sich auch solche feinteiligen, wasserunlöslichen Natriumalumosilikate verwenden, die in Gegenwart von wasserlöslichen anorganischen oder organischen Dispergiermitteln gefällt und kristallisiert wurden. Diese können in beliebiger Weise vor oder während der Fällung bzw. Kristallisation in das Reaktionsgemisch eingebracht werden.

Im Rahmen der vorliegenden Erfindung sind Na-Zeolith A und Na-Zeolith P ganz besonders bevorzugt.

Bei den **Verbindungen d5)** handelt es sich um **kationische Schichtgitterverbindungen,** dem Fachmann einschlägig bekannte Verbindungen, deren Struktur und Herstellung beispielsweise von W. T. Reichle in Chemtec (Januar 1986), Seiten 58-63**,** beschrieben werden.
Der Prototyp kationischer Schichtgitterverbindungen ist das Mineral Hydrotalcit [Mg₆Al₂(OH)₁₆](CO₃)·4 H₂O. Hydrotalcit leitet sich strukturell vom Brucit [Mg(OH)₂] ab. Brucit kristallisiert in einer Schichtstruktur mit den Metallionen in Oktaederlücken zwischen zwei Schichten aus hexagonal dicht gepackten (OH⁻)-Ionen. Dabei wird nur jede zweite Schicht der Oktaederlücken von Metallionen M besetzt, so daß Schichtpakete (OH)-M-(OH) entstehen. Die Zwischenschichten sind im Brucit leer, im Hydrotalcit sind einige - etwa jede zweite bis fünfte - der Mg(II)-Ionen statistisch durch Al(III)-Ionen ersetzt. Das Schichtpaket erhält dadurch insgesamt eine positive Ladung. Diese Ladung wird durch Anionen ausgeglichen, die sich zusammen mit leicht entfernbarem Kristallwasser in den Zwischenschichten befinden. Schema 1 zeigt - schematisch - den Schichtaufbau von Hydrotalcit.

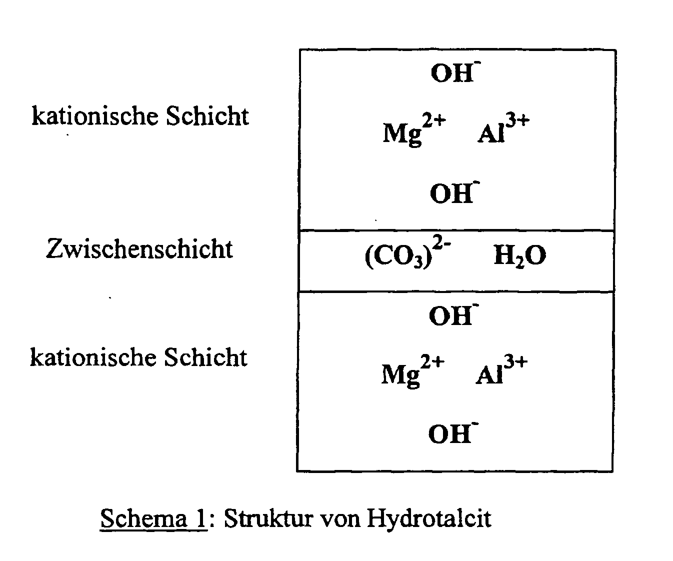

Hydrotalcite bilden pulverige, sich talkig anfühlende Massen mit BET-Oberflächen bis zu etwa 150 m²/g. Zwei Grundsynthesen sind literaturbekannt: Eine Möglichkeit der Synthese besteht darin, wäßrige Lösungen der entsprechenden Metallsalze mit Lauge zu behandeln, wobei der sich bildende Hydrotalcit ausfällt. Eine andere Möglichkeit geht von wasserunlöslichen Ausgangsverbindungen wie Metalloxiden und -hydroxiden aus. Es handelt sich hierbei um heterogene Reaktionen, die üblicherweise im Autoklaven ausgeführt werden.

Wie bereits erwähnt ist Hydrotalcit lediglich der Prototyp kationischer Schichtverbindungen. Die vom Hydrotalcit bekannten Synthesemethoden werden jedoch auch allgemein zur Synthese beliebiger kationischer Schichtverbindungen herangezogen. Wie dem Fachmann bekannt lassen sich diese Synthesemethoden ganz allgemein als Hydrothermalsynthese klassifizieren. Unter Hydrothermalsynthese im engeren Sinne versteht man dabei die Synthese von Mineralien aus hocherhitzten - oberhalb einer Temperatur von 100 °C und einem Druck von 1 atm - wäßrigen Suspensionen; Hydrothermalsynthesen werden meist in Druckgefäßen ausgeführt, da die angewendeten Temperaturen weit über der Siedetemperatur des Wassers liegen, meist sogar über dessen kritischer Temperatur.

Unter kationischen Schichtgitterverbindungen d5) werden im Rahmen der vorliegenden Erfindung Verbindungen der allgemeinen Formel (D-5) verstanden

[EₑZ_{z}D_{d}Vᵥ(OH⁻)ₓ](Aⁿ⁻)ₐ·qH₂O (D-5)

worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d + 4v = x + na ist.

In einer Ausführungsform hat v in der allgemeinen Formel (D-5) den Wert Null. Diese Schichtverbindungen lassen sich mithin durch die allgemeine Formel (D-5*) beschreiben:

[EₑZ_{z}D_{d} (OH⁻)ₓ](Aⁿ⁻)ₐ·q H₂O (D-5*)

worin bedeuten:
- E ein einwertiges Kation aus der Gruppe der Alkalimetalle,
- e eine Zahl im Bereich von 0 bis 2,
- Z ein zweiwertiges Metall-Kation,
- z eine Zahl im Bereich von 0 bis 6,
- D ein dreiwertiges Metall-Kation,
- d eine Zahl im Bereich von 0 bis 3,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und e + 2z + 3d = x + na ist.

In einer weiteren Ausführungsform hat e in der allgemeinen Formel (D-5) den Wert Null. Diese Schichtverbindungen lassen sich mithin durch die allgemeine Formel (D-5**) beschreiben:

[Z_{z}D_{d}Vᵥ(OH⁻)ₓ](Aⁿ⁻)ₐ·q H₂O (D-5**)

worin bedeuten:
- Z ein zweiwertiges Metall-Kation,
- z eine Zahl im Bereich von 0 bis 6,
- D ein dreiwertiges Metall-Kation,
- d eine Zahl im Bereich von 0 bis 3,
- V ein vierwertiges Metall-Kation,
- v eine Zahl im Bereich von 0 bis 1,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und 2z + 3d + 4v = x + na ist.

In einer bevorzugten Ausführungsform haben e und v in der allgemeinen Formel (D-5) jeweils den Wert Null. Diese Schichtverbindungen lassen sich mithin durch die allgemeine Formel (D-5***) beschreiben:

[Z_{z}D_{d}(OH⁻)ₓ](Aⁿ⁻)ₐ·q H₂O (D-5***)

worin bedeuten:
- Z ein zweiwertiges Metall-Kation,
- z eine Zahl im Bereich von 0 bis 6,
- D ein dreiwertiges Metall-Kation,
- d eine Zahl im Bereich von 0 bis 3,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und 2z + 3d = x + na ist.

Die Schichtverbindungen gemäß Formel (D-5***) haben hinsichtlich der Zusammensetzung mithin die dem Fachmann bekannte Struktur der "klassischen" Hydrotalcite. Von diesen sind wiederum jene bevorzugt, bei denen D Aluminium, d die Zahl 1 und z eine Zahl im Bereich von 1 bis 5 bedeuten. Diese speziellen Hydrotalcite werden durch die allgemeine Formel (D-5****) charakterisiert:

[Z_{z}Al (OH⁻)ₓ](Aⁿ⁻)ₐ·q H₂O (D-5****)

worin bedeuten:
- Z ein zweiwertiges Metall-Kation,
- z eine Zahl im Bereich von 1 bis 5,
- (Aⁿ⁻) ein Säureanion der Ladung n-, wobei n eine ganze Zahl von 1 bis 3 ist, und
- q eine Zahl im Bereich von 1 bis 10,
- mit der Maßgabe, daß x > a und 2z + 3 = x + na ist.

Bevorzugt im Sinne der Erfindung sind solche kationische Schichtverbindungen (D-5), in der Z für mindestens ein zweiwertiges Metallion, ausgewählt aus der Gruppe Magnesium, Calcium und Zink steht. Bevorzugt steht Z für genau ein zweiwertiges Metallion aus der genannten Gruppe und insbesondere für Magnesium. Ganz besonders bevorzugt werden kationische Schichtverbindungen der allgemeinen Formel I, in denen Aⁿ⁻ für ein Säureanion mit der Ladung (n-) ausgewählt aus der Anionengruppe Carbonat, Hydrogencarbonat, Perchlorat, Acetat, Nitrat, Tartrat, Oxalat und Jodid steht, vorzugsweise für Carbonat. Wenn bei der Erläuterung zu obiger Formel I von mindestens einem zweiwertigen Metallion die Rede ist, so bedeutet dies, daß in der kationischen Schichtverbindung unterschiedliche zweiwertige Metallionen nebeneinander vorliegen können. Die Indices x, y und z sowie m können ganze oder gebrochene Zahlen innerhalb der angegebenen Bedingungen sein. Besonders vorteilhaft sind kationische Schichtverbindungen der allgemeinen Formel (D-5), in der Z für Magnesium und Aⁿ⁻ für Carbonat steht.

Bei den **Verbindungen d6)** handelt es sich um sogenannte **CHAP-Verbindungen.** Dies sind Calcium-Hydroxy-Aluminium-(hydrogen)phosphite und/oder deren Hydrate. Diese Verbindungen haben die allgemeine Formel (D-6a)

CaₓAl₂(OH)₂₍ₓ₊₂₎HPO₃·mH₂O (D-6a),

worin:
- x = eine Zahl im Bereich von 2 bis 8 und
- m = eine Zahl im Bereich von 0 bis 12,
bzw. die allgemeine Formel (D-6b)

CaₓAl₂ (OH)_{2(x+3-y)}(HPO₃)_{y}·mH₂O (D-6b),

worin:
- x = eine Zahl im Bereich von 2 bis 12,
- die Bedingung gilt, daß (2x + 5) / 2> y > 0 und
- m = eine Zahl im Bereich von 0 bis 12,
- mit der Maßgabe, daß y = 1 ausgenommen ist, sofern x = eine Zahl im Bereich von 2 bis 8 ist.

Die CHAP-Verbindungen können beispielsweise mittels einem Verfahren hergestellt werden, bei dem man Mischungen aus Calciumhydroxid und/oder Calciumoxid, Aluminiumhydroxid und Natriumhydroxid oder aus Calciumhydroxid und/oder Calciumoxid und Natriumaluminat mit phosphoriger Säure in zur Herstellung der erwünschten Calcium-Aluminium-Hydroxy-Hydrogenphosphite entsprechenden Mengen in wässrigem Medium umsetzt und das Reaktionsprodukt in an sich bekannter Weise abtrennt und gewinnt. Das aus der oben beschriebenen Umsetzung direkt anfallende Reaktionsprodukt kann nach bekannten Verfahren vom wässrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit Wasser und Trocknen des gewaschenen Rückstands bei Temperaturen von beispielsweise 60 - 130°C, vorzugsweise bei 90 - 120°C.

Für die Umsetzung kann sowohl feinteiliges, aktives Aluminiumhydroxid in Kombination mit Natriumhydroxid als auch ein Natriumaluminat eingesetzt werden. Calcium kann in Form von feinteiligem Calciumoxid oder Calciumhydroxid oder Mischungen daraus verwendet werden. Die phosphorige Säure kann in unterschiedlicher konzentrierter Form eingesetzt werden. Die Umsetzungstemperaturen liegen vorzugsweise zwischen 50 und 100°C, weiter vorzugsweise zwischen etwa 60 und 85°C. Katalysatoren oder Beschleuniger sind nicht erforderlich, stören aber auch nicht. Bei den Verbindungen kann das Kristallwasser ganz oder teilweise durch thermische Behandlung entfernt werden.

Bei ihrer Anwendung als Stabilisatoren spalten die getrockneten Calcium-Hydroxy-Aluminium-hydroxyphosphite bei den beispielsweise für Hart-PVC üblichen Verarbeitungstemperaturen von 160 - 200°C kein Wasser ab, so dass in den Formteilen keine störende Blasenbildung auftritt.

Zur Verbesserung ihrer Dispergierbarkeit in halogenhaltigen thermoplastischen Harzen können die CHAP-Verbindungen in bekannter Weise mit oberflächenaktiven Mittel beschichtet werden.

Bei den **Verbindungen d7)** handelt es sich um **Katoite.** Dies sind Verbindungen der Struktur (D-7)

Ca₃Al₂(OH)₁₂.mH₂O (D-7),

wobei m eine Zahl im Bereich von 0 bis 10 bedeutet. Die Katoite können gegebenenfalls oberflächenmodifiziert sein. Sie haben ein ganz bestimmtes Kristallgitter (sogenannte Hydrogranatstruktur), wodurch sie sich von anderen Calcium-Aluminium-Hydroxyverbindungen unterscheiden. Dieses Kristallgitter samt Gitterabständen wird in dem Artikel von C. Cohen-Addad et P. Ducros in Acta Cryst. (1967), 23, Seiten 220 bis 225 beschrieben. Demnach handelt es sich um ein kubisches Kristallgitter. Das Aluminium wird oktaedrisch umgeben von sechs Sauerstoffen, die je noch ein Wasserstoff tragen. Das Calcium ist von 8 Sauerstoffen umgeben, die einen gestörten Kubus bilden, der auch als triangularer Dodekaeder bezeichnet wird.
Die Katoite der allgemeinen Formel Ca₃Al₂(OH)₁₂ können beispielsweise in Anlehnung in die deutsche Patentschrift DE 2 424 763 aus den Hydroxiden des Calciums und Aluminiums in entsprechenden stöchiometrischen Mengen im wässrigen System hergestellt werden. Sie fallen je nach Versuchstemperaturen und Reaktionszeiten mit unterschiedlichen mittleren Teilchendurchmessern an.

Bevorzugt werden Temperaturen im Bereich von 50 bis 150 °C und Reaktionszeiten von 0,1 bis 9 Stunden. Dabei fallen die Katoite mit mittleren Teilchendurchmessern von 0,1 bis 100 µm, vorzugsweise 0,5 bis 30 µm an. Es kann vorkommen, dass als Nebenprodukt geringe Mengen an calciumhaltigen Hydroxyaluminaten (Hydrocalumite) anfallen, die eine Schichtstruktur aufweisen und durch die oben beschriebene allgemeine Formel wiedergegeben werden.
Bei der Herstellung der Katoite können auch Überschüsse von Aluminium- oder Calciumhydroxid eingesetzt werden, wobei Mischungen von nicht umgesetztem Calcium- und/oder Aluminiumhydroxid und Katoit entstehen. Diese Mischungen können ebenfalls im Sinne der Erfindung verwendet werden.
Falls gewünscht, können die Katoite der obigen Formel oberflächenmodifiziert sein mit einem oder mehreren Additiven ausgewählt aus den Gruppen
v-a) gegebenenfalls alkoxylierte Alkohole mit einer oder mehreren Hydroxylgruppen,
v-b) teilweise oder vollständig epoxidierte ungesättigte Fettsäuren, Fettalkohole und/oder deren Derivate,
v-c) Voll- und Partialester von Polyolen mit 3 bis 30 C-Atomen und 2 bis 6 Hydroxylgruppen mit Carbonsäuren mit 6 bis 22 C-Atomen,
v-d) Alkyl- und Arylphosphiten,
v-e) Homo- und Mischpolymeren von Acrylsäure und Methacrylsäure,
v-f) Lignin- und Naphthalinsulfonate und/oder Trimerfettsäuren,
v-g) Salze von Fettsäuren.

Als Additive kommen in der Gruppe v-a) sowohl monofunktionelle Alkohole als auch Polyole mit 3 bis 30 C-Atomen und 2 bis 6 Hydroxylgruppen in Betracht, die gegebenenfalls alkoxyliert, vorzugsweise ethoxyliert sein können. Aus der Gruppe der monofunktionellen Alkohole werden bevorzugt Fettalkohole mit 6 bis 22 C-Atomen eingesetzt wie Caprin-, Lauryl-, Palmityl-, Stearyl- , Oleyl-, Linolyl-, Arachidyl- und Behenylalkohol sowie ihre technischen Mischungen wie sie aus natürlichen Ölen und Fetten zugänglich sind. Ganz besonders bevorzugt werden von diesen Fettalkoholen die ethoxylierten Vertreter hiervon eingesetzt mit 2 bis 15 Mol Ethylenoxid. Aus der Gruppe der Polyole eignen sich Diole mit 3 bis 30 C-Atomen, wie Butandiole, Hexandiole, Dodecandiole, sowie Trimethylolpropan, Pentaerythrit, Glycerin und deren technische Oligomerengemische mit durchschnittlichen Kondensationsgraden von 2 bis 10. Ganz besonders bevorzugt werden aus der Gruppe der Polyole solche mit 3 bis 30 C-Atomen, die pro 3 C-Atomen mindestens eine Hydroxylgruppe oder einen Ethersauerstoff tragen, vorzugsweise Glycerin und/oder die technischen Oligoglyceringemische mit durchschnittlichen Kondenstionsgraden von 2 bis 10.

Bei den Additiven der Gruppe v-b) handelt es sich um teilweise oder vollständig epoxidierte ungesättigte Fettsäuren oder Fettalkohole mit 6 bis 22 C-Atomen oder Derivate hiervon. Als Derivate der epoxidierten Fettsäuren oder Fettalkoholen sind insbesondere die Ester hiervon geeignet, wobei die epoxidierten Fettsäuren und epoxidierten Fettalkohole miteinander verestert sein können oder aber auch mit nichtepoxidierten Carbonsäuren oder mit nichtepoxidierten ein- oder mehrwertigen Alkoholen. Die epoxidierten Fettsäuren leiten sich vorzugsweise von der ungesättigten Palmitolein-, Öl-, Elaidin-, Petroselin-, Ricinol-, Linolen-, Gadolein- , oder Erucasäure ab, die nach bekannten Verfahren ganz oder teilweise epoxidiert werden. Die epoxidierten Fettalkohole leiten sich vorzugsweise ab von den ungesättigten Alkoholen Oleyl-, Elaidyl-, Ricinol-, Linoleyl- , Linolenyl-, Gadoleyl-, Arachidon- oder Erucaalkohol ab, die ebenfalls nach bekannten Verfahren ganz oder teilweise epoxidiert werden. Geeignete Ester von epoxidierten Fettsäuren sind Ester von ein-, zwei- und/oder dreiwertigen Alkoholen, die vollständig mit epoxidierten, ungesättigten Carbonsäuren mit 6 bis 22 C-Atomen verestert sind wie Methyl-, 2-Ethylhexyl-, Ethylenglykol-, Butandiol-, Neopentylglykol-, Glycerin- und/oder Trimethylolpropanester von epoxidierter Lauroleinsäure, Palmitoleinsäure, Ölsäure, Ricinolsäure, Linolsäure und/oder Linolensäure. Bevorzugt werden Ester von dreiwertigen Alkoholen und praktisch vollständig epoxidierten ungesättigten Carbonsäuren mit 12 bis 22 C-Atomen, und insbesondere Ester von Glycerin mit praktisch vollständig epoxidierten ungesättigten Carbonsäuren mit 12 bis 22 C-Atomen. Wie in der Fettchemie üblich, können die epoxidierten Carbonsäureglyceride auch technische Gemische darstellen, wie man sie durch Epoxidation von natürlichen ungesättigten Fetten und ungesättigten Ölen erhält. Vorzugsweise wird epoxidiertes Rüböl, epoxidiertes Sojaöl und epoxidiertes Sonnenblumenöl neuer Züchtung eingesetzt.

Bei den Additiven der Gruppe v-c) handelt es sich um Voll- oder Partialester, die nach den einschlägigen Methoden der präparativen organischen Chemie, beispielsweise durch säurekatalysierte Umsetzung von Polyolen mit Carbonsäuren erhalten werden. Als Polyolkomponente kommen dabei solche in Betracht, die bereits in Zusammenhang mit der Gruppe a) besprochen wurden. Als Säurekomponente werden bevorzugt aliphatische, gesättigte und/oder ungesättigte Carbonsäuren mit 6 bis 22 C-Atomen wie Capronsäure, Caprylsäure, Caprinsäure, Laurinsäure, Myrisitinsäure, Palmitinsäure, Palmitoleinsäure, Stearinsäure, Ölsäure, Ricinolsäure, Linolsäure, Linolensäure, Behensäure oder Erucasäure eingesetzt. Wie in der Fettchemie üblich, kann die Carbonsäure auch ein technisches Gemisch darstellen, wie es bei der Druckspaltung von natürlichen Fetten und Ölen anfällt. Bevorzugt werden Partialester von Glycerin und insbesondere von deren technischen Oligoglyceringemischen mit durchschnittlichen Kondensationsgraden von 2 bis 10 mit gesättigten und/oder ungesättigten aliphatischen Carbonsäuren mit 6 bis 22 C- Atomen.
Schliesslich können gemäss Gruppe v-d) Alkyl- und Arylphosphite eingesetzt werden, vorzugsweise solche der folgenden allgemeinen Formel 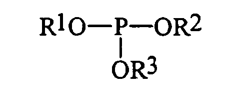 in der R¹, R² und R³ unabhängig voneinander für einen Alkylrest mit 1 bis 18 Kohlenstoffatomen oder einen Phenylrest stehen. Typische Beispiele für Additive der Gruppe d) sind Tributylphosphit, Triphenylphosphit, Dimethylphenylphosphit und/oder Dimethylstearylphosphit. Bevorzugt wird Diphenyldecylphosphit.

Bei den Additiven aus der Gruppe v-e) handelt es sich bevorzugt um Polymere von Acrylsäure und Methacrylsäure sowie deren Copolymeren. Der Begriff der Copolymere wird in doppeltem Sinne verstanden: einmal als reine Copolymere von Acrylsäure und Methacrylsäure und zum anderen als Copolymere von (Meth)Acrylsäure mit weiteren vinylisch ungesättigten, zur Polymerisation fähigen Monomeren. Beispiele für weitere zur Polymerisation fähige Monomere sind sulfon- und phosphonsäuregruppenhaltige ungesättigte Monomere, ungesättigte aliphatische Carbonsäuren mit 3 bis 5 C-Atomen, Amide von ungesättigten aliphatischen Carbonsäuren mit 3 bis 5 C-Atomen, aminogruppenhaltige ungesättigte Monomere und/oder deren Salze, Vinylacetat, Acrolein, Vinylchlorid, Acrylnitril, Vinylidenchlorid, 1,3-Butadien, Styrol, Alkylstyrole mit 1 bis 4 C-Atomen im Alkylrest. Beispiele für Additive der Gruppe v-e) sind Polyacrylsäure, Polymethacrylsäure - im folgenden werden Acrylsäure und Methacrylsäure sowie deren Derivate vereinfacht als (Meth)acrylsäure bzw. Derivate abgekürzt - und/oder deren Salze wie Polynatrium(meth)acrylat, Copolymere von (Meth)acrylsäure mit Maleinsäure, Maleinsäureanhydrid, Styrolsulfonsäure, α-Methylstyrol, 2-Vinylpyridin, 1-Vinylimidazol, Dimethylaminopropyl(meth)acrylamid, 2-(meth)acrylamido-2-methylpropansulfonsäure, (Meth)acrylamid, N-Hydroxydimethyl(meth)acrylamid und/oder deren Salze. Ganz besonders bevorzugt unter den polymeren Additiven sind solche, die einen überwiegend anionischen Charakter aufweisen, das heisst, die mehrheitlich Säuregruppen frei oder in Form ihrer Salze tragen. Insbesondere bevorzugt sind Polymere von (Meth)acrylsäure sowie deren Copolymerisate mit Styrol, Acrolein, Alkylstyrolen mit 1 bis 4 C-Atomen im Alkylrest, Styrolsulfonsäure, Maleinsäure und/oder deren Salze, insbesondere deren Natriumsalze und Maleinsäureanhydrid. Zweckmässigerweise besitzen die polymeren Additive der Gruppe e) ein Molekulargewicht von 1000 bis 10000. Die Herstellung der polymeren Additive kann nach bekannten Verfahren wie Substanz- oder Lösungsmittelpolymerisation erfolgen.

Die den Additiven der Gruppe v-g) handelt es sich um Salze von Fettsäuren. Geeignete Fettsäuren wurden bereits im Zusammenhang mit Additiven der Gruppe v-c) aufgezählt. Bevorzugt werden hier die Alkalisalze der gesättigten Fettsäuren.

Ein oder mehrere Additive aus einer oder mehreren der Gruppen v-a) bis v-g) können zur Modifizierung der Katoite eingesetzt werden, wobei die Gesamtmenge an Additiven in dem Bereich von 0, 1 bis 10 Gew% - bezogen auf Katoit - liegt. Bei Kombinationen der polymeren Additive v-e) mit weiteren Additiven aus den Gruppen v-a) bis v-d) und v-f) und v-g) ist es bevorzugt, die Additive in Mengen von 50 bis 90 Gew% - bezogen auf die Gesamtadditivmenge - zu haben. Besonders bevorzugt werden von den oberflächenmodifizierten Katoiten solche, die mit einem oder mehreren Additiven aus den Gruppen v-b), v-e) und v-g) modifiziert sind.

Die Modifizierung der Katoite kann entweder in situ oder nachträglich erfolgen.

Bei der nachträglichen Modifzierung werden die Katoite mit organischen oder wässrigen Lösungen der Additive innigst vermahlen, vorzugsweise mit Mahlkörpermühlen und insbesondere mit einer Kugelmühle und anschliessend gewöhnlich getrocknet. Sofern es sich bei den Additiven um bei Raumtemperatur flüssige oder niedrigschmelzende Produkte handelt, muss man natürlich keine Lösungen davon verwenden. Ansonsten verwendet man bei den Additiven v-a) bis v-g) am liebsten klare wässrige Lösungen oder Lösungen mit polaren organischen Lösungsmitteln.

Der Begriff der polaren organischen Lösungsmittel umfasst bei Raumtemperatur (15 bis 25°C) flüssige Kohlenwasserstoffverbindungen, die mindestens eine elektronegativeren Substituenten als Kohlenstoff tragen. Dazu zählen Chlorkohlenwasserstoffe, Alkohole, Ketone, Ester, Ether und/oder Glykolether. Geeignete polare organische Lösungsmittel sind Methanol, Ethanol, n-Butanol, Aceton, Methylethylketon, Methylisobutylketon, Cyclohexanol, Isophoron, Ethylacetat, Milchsäureethylester, 2-Methoxyethylacetat, Tetrahydrofuran, Ethylglykolmonomethylether, Diethylenglykolmonoethylether.

Damit die Oberfläche der Katoite gleichmässig modifiziert werden kann, ist es bei Anwesenheit der Additive der Gruppe v-e) zweckmässig, wenn diese löslich sind in polaren organischen Lösungsmitteln der beschriebenen Art und/oder Wasser mit pH-Werten von 8 bis 12. Der Begriff löslich bedeutet in diesem Zusammenhang, dass die polymeren Additive v-e) in den polaren organischen Lösungsmitteln und in einer wässrigen Lösung mit pH 10, eingestellt mit Alkalihydroxiden bei 20°C, zu mindestens 0,01 Gew.-%, vorzugsweise 0,1 Gew.-% - bezogen auf die Lösung - und insbesondere unter den angegebenen Bedingungen vollständig klar gelöst sind.

Die Modifizierung kann auch in situ erfolgen, das heisst, man kann bereits den Calcium- und Aluminiumhydroxid-Lösungen, aus dem sich der Katoit bildet, die Additive gegebenenfalls in Form ihrer Lösungen zusetzen.

Letztendlich kann man aber auch beide Modifizierungsarten kombinieren, was sich für die Modifizierung mit mehreren Additiven, empfiehlt, die insbesondere unterschiedliches Lösungsverhalten zeigen.
Bei den **Verbindungen d8)** handelt es sich um **Glycidylverbindungen.** Sie enthalten die Glycidylgruppe 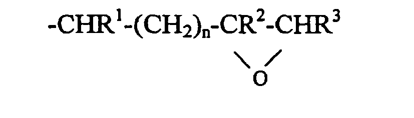 wobei diese direkt an Kohlenstoff-, Sauerstoff-, Stickstoff- oder Schwefelatome gebunden ist, und worin entweder R¹ und R³ beide Wasserstoff sind, R² Wasserstoff oder Methyl und n=0 ist, oder worin R¹ und R³ zusammen -CH₂-CH₂- oder -CH₂-CH₂-CH₂- bedeuten, R² dann Wasserstoff und n=0 oder 1 ist.

Beispiele für geignete Glycidylverbindungen sind solche der nachfolgend beschriebenen Gruppen d8-I) bis d8-V).

### Verbindungen der Gruppe d8-I)

Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. b-Methyl-epichlorhydrin. Die Umsetzung erfolgt zweckmäßig in Gegenwart von Basen.

Als Verbindungen mit mindestens einer Carboxylgruppe im Molekül können aliphatische Carbonsäuren verwandt werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin- , Myristin-, Palmitin-, Stearin- und Pelargonsäure.

Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Es können auch carboxylterminierte Addukte, z.B. von Trimellithsäure und Polyolen, wie beispielsweise Glycerin oder 2,2-Bis-(4-hydroxycyclohexyl)propan verwandt werden.

### Verbindungen der Gruppe d8-II)

Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie C₇-C₉-Alkanol- und C₉-C₁₁-Alkanolgemischen.

Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

### Verbindungen der Gruppe d8-III)

(N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N"-Tri- und N,N',N",N"'-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

### Verbindungen der Gruppe d8-IV)

S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

### Verbindungen der Gruppe d8-V)

Epoxidverbindungen mit einem Rest der Formel I, worin R₁ und R₃ zusammen -CH₂-CH₂- bedeuten und n=0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel I, worin R₁ und R₃ zusammen -CH₂-CH₂- sind und n=1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise (™ bedeutet ®):
- flüssige Bisphenol-A-diglycidylether wie Araldit™GY 240, Araldit™GY 250, Araldit™GY 260, Araldit™GY 266, Araldit ™GY 2600, Araldit™MY 790:
- feste Bisphenol- A-diglycidylether wie Araldit™GT 6071, Araldit™GT 7071, Araldit™GT 7072, Araldit™GT 6063, Araldit™GT 7203, Araldit™GT 6064, Araldit™GT 7304, Araldit™GT 7004, Araldit™GT 6084, Araldit™GT1999, Araldit™GT 7077, Araldit™GT 6097, Araldit™GT 7097, Araldit™GT 7008, Araldit™GT 6099, Araldit™GT 6608, Araldit™GT 6609, Araldit™GT 6610;
- flüssige Bisphenol-F-diglycidylether wie Araldit™GY 281, Araldit™py 302, Araldit ™PY 306:
- feste Polyglycidylether von Tetraphenylethan wie CG Epoxy Resin™0163:
- feste und flüssige Polyglycidylether von Phenolformaldehyd Novolak wie EPN 1138, EPN 1139, GY 1180, PY 307;
- feste und flüssige Polyglycidylether von o-Cresolformaldehyd Novolak wie ECN 1235, ECN 1273, ECN 1280, ECN 1299;
- flüssige Glycidylether von Alkoholen wie Shell™ Glycidylether 162, Araldit™DY 0390, Araldit™DY 0391;
- flüssige Glycidylether von Carbonsäuren wie Shell™Cardura E Terephthalsäureester, Tri mellithsäureester, Araldit™PY-284;
- feste heterocyclische Epoxidharze (Triglycidylisocyanurat) wie Araldit™PT 810;
- flüssige cycloaliphatische Epoxidharze wie Araldit™CY 179;
- flüssige N,N,O-Triglycidylether von p-Aminophenol wie Araldit™MY 0510;
- Tetraglycidyl-4-4'-methylenbenzamin oder N,N,N',N'-Tetraglycidyldiaminophenylmethan wie Araldit™ MY 720, Araldit™MY 721.

Vorzugsweise finden Epoxidverbindungen mit zwei funktionellen Gruppen Verwendung. Es können aber auch Epoxidverbindungen mit einer, drei oder mehr funktionellen Gruppen eingesetzt werden.

Vorwiegend werden Epoxidverbindungen, vor allem Diglycidylverbindungen, mit aromatischen Gruppen eingesetzt.

Gegebenenfalls kann auch ein Gemisch verschiedener Epoxidverbindungen eingesetzt werden.

Besonders bevorzugt sind als endständige Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F).

Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

Bei den **Verbindungen d9)** handelt es sich um **beta-Diketone und beta-Ketoester.** Verwendbare 1,3-Dicarbonylverbindungen können lineare oder cyclische Dicarbonylverbindungen sein. Bevorzugt werden Dicarbonylverbindungen der folgenden Formel (D-9) eingesetzt,

R¹-CO-CHR²-CO-R³ (D-9)

worin bedeuten:
- R¹: C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-cycloalkyl, durch C₁-C₄-Alkyl substituiertes C₅-C₁₂-Cycloalkyl oder eine Gruppe -R⁵-S-R⁶ oder -R⁵-O- R⁶,
- R²: Wasserstoff, C₁-C₈-Alkyl, C₂-C₁₂-Alkenyl, Phenyl, C₇-C₁₂-Alkylphenyl, C₇-C₁₀-Phenylalkyl oder eine Gruppe -CO- R⁴,
- R³: eine der für R¹ gegebenen Bedeutungen oder C₁-C₁₈-Alkoxy,
- R⁴: C₁-C₄-Alkyl oder Phenyl,
- R⁵: C₁-C₁₀-Alkylen,
- R⁶: C₁-C₁₂-Alkyl, Phenyl, C₇-C₁₈-Alkylphenyl oder C₇-C₁₀ -Phenylalkyl.

Hierzu gehören die Hydroxylgruppen enthaltenden Diketone der EP-346 279 und die Oxa- und Thia-diketone der EP-307 358 ebenso wie die auf Isocyansäure basierenden Ketoester der US 4,339,383.

R¹ und R³ als Alkyl können insbesondere C₁-C₁₈-Alkyl sein, wie z.B. Methyl, Ethyl, n-Propyl, Isopropyl, n-Butyl, tert Butyl, Pentyl, Hexyl, Heptyl, Octyl, Decyl, Dodecyl oder Octadecyl.

R¹ und R³ als Hydroxyalkyl stellen insbesondere eine Gruppe -(CH₂)ₙ-OH dar, worin n 5, 6 oder 7 ist.

R¹ und R³ als Alkenyl können beispielsweise Vinyl, Allyl, Methallyl, 1-Butenyl, 1-Hexenyl oder Oleyl bedeuten, vorzugsweise Allyl.

R¹ und R³ als durch OH, Alkyl, Alkoxy oder Halogen substituiertes Phenyl können beispielsweise Tolyl, Xylyl, tertButylphenyl, Methoxyphenyl, Ethoxyphenyl, Hydroxyphenyl, Chlorphenyl oder Dichlorphenyl sein.

R¹ und R³ als Phenylalkyl sind insbesondere Benzyl.

R² und R³ als Cycloalkyl oder Alkyl-cycloalkyl sind insbesondere Cyclohexyl oder Methylcyclohexyl.

R² als Alkyl kann insbesondere C₁-C₄-Alkyl sein. R² als C₂-C₁₂-Alkenyl kann insbesondere Allyl sein. R² als Alkylphenyl kann insbesondere Tolyl sein. R² als Phenylalkyl kann insbesondere Benzyl sein. Vorzugsweise ist R² Wasserstoff. R³ als Alkoxy kann z.B. Methoxy, Ethoxy, Butoxy, Hexyloxy, Octyloxy, Dodecyloxy, Tridecyloxy, Tetradecyloxy oder Octadecyloxy sein. R⁵ als C₁-C₁₀-Alkylen ist insbesondere C₂-C₄-Alkylen. R⁶ als Alkyl ist insbesondere C₄-C₁₂-Alkyl, wie z.B. Butyl, Hexyl, Octyl, Decyl oder Dodecyl. R⁶ als Alkylphenyl ist insbesondere Tolyl. R⁶ als Phenylalkyl ist insbesondere Benzyl.

Beispiele für 1,3-Dicarbonylverbindungen der obigen Formel sind Acetylaceton, Butanoylaceton, Heptanoylaceton, Stearoylaceton, Palmitoylaceton, Lauroylaceton, Benzoylaceton, Dibenzoylmethan, Lauroylbenzoylmethan, Palmitoylbenzoylmethan, Stearoyl-benzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl- benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoylformylmethan, Benzoyl-phenylacetylmethan, Bis-cyclohexanoyl-methan, Dipivaloyl-methan, 2-Acetylcyclopentanon, 2-Benzoylcyclo-pentanon, Diacetessigsäuremethyl-, -ethyl- und - allylester, Benzoyl-, Propionyl- und Butyrylacetessigsäuremethyl- und -ethylester, Triacetylmethan, Acetessigsäuremethyl-, -ethyl-, -hexyl-, -octyl-, -dodecyl- oder -octadecylester, Benzoylessigsäuremethyl-, -ethyl-, - butyl-, -2-ethylhexyl-, -dodecyl- oder - octadecylester, sowie Propionyl- und Butyrylessigsäure-C₁-C₁₈- alkylester. Stearoylessigsäureethyl-, -propyl-, -butyl-, - hexyl- oder -octylester sowie mehrkernige β-Ketoester wie in EP 433.230 beschrieben und Dehydracetsäure sowie deren Zink-, Magnesium- oder Alkalisalze.

Bevorzugt sind 1,3-Diketoverbindungen der obigen Formel, worin R¹ C₁-C₁₈-Alkyl, Phenyl, durch OH, Methyl oder Methoxy substituiertes Phenyl, C₇-C₁₀-Phenylalkyl oder Cyclohexyl ist, R² Wasserstoff ist und R³ eine der für R¹ gegebenen Bedeutungen hat.

Die 1,3-Dicarbonylverbindungen der obigen Formel können alleine, als Mischungen und/oder als deren Alkali-, Erdalkali- und Zinkchelate eingesetzt werden.

Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, eingesetzt werden.

Bei den **Verbindungen d10)** handelt es sich um **Dihydropyridine und Polydihydropyridine.** Als monomere Dihydropyridine kommen Verbindungen, wie z. B. in FR 2 039 496, EP 2 007 , EP 362 012 und EP 24 754 beschrieben, in Frage. Bevorzugt sind solche der Formel (D-10), 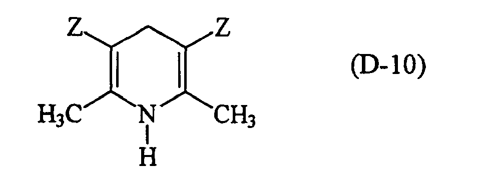 worin Z für CO₂CH₃, CO₂C₂H₅, CO₂ⁿC₁₂H₂₅ oder -CO₂C₂H₄-S- ⁿC₁₂H₂₅ steht. Das hochgestellte n hat dabei die Bedeutung, daß der C₁₂H₂₅-Alkylrest unverzweit ist.

Als Polydihydropyridine kommen vor allem Verbindungen der folgenden Formel in Frage

T-X-R-X-R'-X-L

worin
- X den Rest 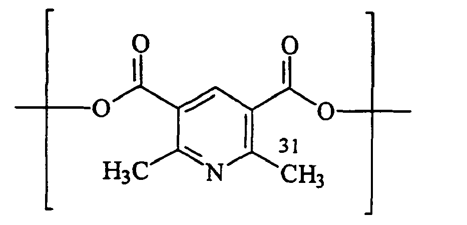 bedeutet,
- T für unsubstituiertes C₁₋₁₂Alkyl steht,
- L dieselben Bedeutungen wie T hat.
- m und n Zahlen von 0 bis 20 bedeuten,
- k die Zahl 0 oder 1 ist,
- R und R' unabhängig voneinander Ethylen, Propylen, Butylen oder eine Alkylen- oder Cycloalkylenbismethylengruppe des Typs - (-CₚH₂ₚ-X-)ₜCₚH₂ₚ- sind,
- p eine Zahl im Bereich von 2 bis 8 ist,
- t eine Zahl im Bereich von 0 bis 10 ist
- X für Sauerstoff oder Schwefel steht.

Derartige Verbindungen sind in EP 286 887 näher beschrieben.

Die (Poly-)Dihydropyridine können im chlorhaltigen Polymer zweckmäßig zu 0,001 bis 5 und insbesondere 0,005 bis 1 Gew.-Teilen, bezogen auf das Polymer, eingesetzt werden.

Besonders bevorzugt sind Thiodiethylen-bis-[5-methoxycarbonyl-2,6-dimethyl-1,4-dihydro pyridin-3-carboxylat] und Thiodiethylen-bis-[5-methoxycarbonyl-2,6-dimethyl-1,4-dihydropyridin-3-carboxylat].

Bei den **Verbindungen d11)** handelt es sich um **Polyole und Polyolerivate.** Als Polyole besonders geeignet sind beispielsweise Pentaerythrit, Dipentaerythrit, Tripentaerythrit, Bistrimethylolpropan, Inosit, Polyvinylalkohol, Bistrimethylolethan, Trismethylolpropan, Sorbit, Maltit, Isomaltit, Lactit, Lycasin, Mannit, Lactose, Leucrose, Tris-(hydroxylethyl)isocyanurat (THEIC), Palatinit, Tetramethylolcyclohexanol, Tetramethylolcyclopentanol, Tetramethylolcyclopyranol, Glycerin, Diglycerin, Polyglycerin oder Thiodiglycerin sowie Umsetzungsprodukte dieser Polyole mit Ethylenoxid und/oder Propylenoxid.
Die Polyole können gewünschtenfalls an einer oder an mehreren OH-Gruppen verestert oder verethert sein. Bevorzugt sind solche Polyolderivatae, die Ester von Polyolen mit Carbonsäuren darstellen, etwa Glycerinpartialester von Fettsäuren, beispielsweise Glycerinmonooleat, Glycerindioleat, Glycerinmonostearat, Glycerindistearat, Pentaerytrit- oder TMP-Partialester oder Ester von Dicarbonsäuren (z.B. Adipinsäure, Maleinsäure) mit Polyolen wie Pentaerythrit, Glycerin oder Trismethylolpropan.
Die Polyole bzw. Polyolderivate können allein oder in Mischung untereinander eingesetzt werden.
Die Polyole bzw. Polyolderivate können in einer Menge von beispielsweise 0,01 bis 20, zweckmäßig 0,1 bis 20 und insbesondere 0,1 bis 10 Gew.-Teilen, bezogen auf 100 Gew.-Teile halogenhaltigen organischen Kunststoff, eingesetzt werden.

Im Hinblick auf Beispiele für geeignete **Verbindungen d12)** sei ausdrücklich auf Seite 7, Zeile 22 bis Seite 25, Zeile 21, der oben zitierten EP-A-768 336 verwiesen. Die dort genannten **sterisch gehinderten Amine** werden in die Offenbarung der vorliegenden Erfindung ausdrücklich mit einbezogen.

Im Hinblick auf Beispiele für geeignete **Verbindungen d13)** sei ausdrücklich auf Seite 27, Zeile 17 bis Seite 28, Zeile 9, der oben zitierten EP-A-768 336 verwiesen. Die dort genannten Dawsonite werden in die Offenbarung der vorliegenden Erfindung ausdrücklich mit einbezogen.

Bei den **Verbindungen d14)** handelt es sich um **Alkali und ErdalkaliVerbindungen.** Darunter versteht man vornehmlich die Carboxylate der unter d27) beschriebenen Säuren, aber auch entsprechende Oxide bzw. Hydroxide oder (Hydrogen)carbonate. Es kommen auch deren Gemische mit organischen Säuren in Frage. Beispiele sind NaOH, Na-stearat, Na-bicarbonat, KOH, Kaliumstearat, Kaliumbicarbonat, LiOH, Li₂CO3, Li-stearat, CaO, Ca(OH)₂, MgO, Mg(OH)₂, Mg-stearat, CaCO₃, MgCO₃ und Dolomit, Huntit, Kreide, basisches Mg-carbonat sowie andere Na- und K-Salze von Fettsäuren.
Bei Erdalkali- und Zn-Carboxylaten können auch deren Addukte mit MO oder M(OH)₂ (M = Ca, Mg, Sr oder Zn), sogenannte "überbasiche" Verbindungen, zum Einsatz kommen.
Bevorzugt werden zusätzlich zur erfindungsgemäßen Stabilisatorkombination Alkali-, Erdalkali- und/oder Aluminumcarboxylate eingesetzt.

Im Hinblick auf Beispiele für geeignete **Verbindungen d15)** sei ausdrücklich auf Seite 31, Zeile 34 bis Seite 33, Zeile 4, der oben zitierten EP-A-768 336 verwiesen. Die dort genannten **Antioxidantien** werden in die Offenbarung der vorliegenden Erfindung ausdrücklich mit einbezogen.

Bezüglich der **Substanzen der Gruppe (d16)** sei ausdrücklich festgestellt, daß sowohl **Gleitmittel** als auch **Trennmittel,** als auch Gemische von Gleit- und Trennmitteln eingesetzt werden können. Nach dem üblichen Sprachgebrauch des Fachmanns bezeichnet man solche Produkte als Trennmittel, die die Reibungswiderstände überwiegend zwischen Polymerschmelze und Stahloberfläche der bei der formgebenden Verarbeitung eingesetzten Maschine reduzieren; die Reduktion des Reibungswiderstandes hat zur Folge, daß der Massedruck der Schmelze reduziert wird. Demgegenüber wirken Gleitmittel überwiegend in der Polymerschmelze und setzen die internen Reibungskräfte herab, wodurch die Schmelze auch bei hohen Füllstoffgehalten einen guten plastischen Fluß behält, der für die Ausfüllung des formgebenden Werkzeugs von Bedeutung ist.

In einer Ausführungsform der vorliegenden Erfindung werden als Gleit- bzw. Trennmittel bei 20°C feste oder flüssige Calciumsalze und/oder Magnesiumsalze und/oder Aluminiumsalze eingesetzt, die ausgewählt sind aus
- Calciumsalzen von gesättigten oder ungesättigten, geradkettigen oder verzweigten Monocarbonsäuren mit 6 bis 36 C-Atomen,
- Calciumsalzen der unsubstituierten oder mit C₁₋₄-Alkylresten substituierten Benzoesäure,
- Magnesiumsalzen von gesättigten oder ungesättigten, geradkettigen oder verzweigten Monocarbonsäuren mit 6 bis 36 C-Atomen,
- Magnesiumsalzen von gesättigten oder ungesättigten Dicarbonsäuren mit 6 bis 10 C-Atomen,
- Aluminiumsalzen von gesättigten oder ungesättigten, geradkettigen oder verzweigten Monocarbonsäuren mit 6 bis 36 C-Atomen

Für die vorstehend genannten Calcium-, Magnesium- und Aluminiumsalze gilt, daß sie sowohl allein als auch in Mischung eingesetzt werden könnten.

Weitere Gleit- bzw. Trennmittel, die alleine oder in Kombination miteinander als Komponente d16) eingesetzt werden können, sind die hierfür einschlägig aus dem Stand der Technik bekannten Substanzen. Vorzugsweise kommen folgende Verbindungstypen in Frage: Kohlenwasserstoffwachse, die im Temperaturbereich von 70 bis 130°C schmelzen, oxidierte Polyethylenwachse, freie Fettsäuren mit 8 bis 22 C-Atomen und deren verzweigtkettige Isomere, beispielsweise Stearinsäure oder auch Hydroxystearinsäure, α-Olefine, Wachsester, d. h. Ester aus längerkettigen Monocarbonsäuren und Monoalkoholen, primäre und sekundäre, gesättigte und ungesättigte höhere Alkohole mit vorzugsweise 16 bis 44 C-Atomen im Molekül, Ethylendiamindistearat, Montansäureester von Diolen, beispielsweise von Ethandiol, 1,3-Butandiol und Glycerin, Mischungen derartiger Montansäureester mit unveresterten Montansäuren, Partialester aus Fettsäuren mit 8 bis 22 C-Atomen und Polyolen mit 2 bis 6 C-Atomen und 2 bis 6 Hydroxylgruppen, die pro Molekül im Durchschnitt mindestens eine freie Polyol-Hydroxylgruppe enthalten. Einsetzbar sind weiterhin die in der DE-C-19 07 768 beschriebenen Mischester mit Hydroxyl- bzw. Säurezahlen im Bereich von 0 bis 6 aus aliphatischen, cycloaliphatischen oder aromatschen Dicarbonsäuren mit 2 bis 22 C-Atomen im Molekül, aliphatischen Polyolen mit 2 bis 6 Hydroxylgruppen im Molekül und aliphatischen Monocarbonsäuren mit 12 bis 30 C-Atomen im Molekül. Beispiele hierfür sind Mischester aus Maleinsäure-Pentaerythrit-Behensäure, Mischester aus Adipinsäure-Pentaerythrit-Ölsäure und Mischester aus Adipinsäure-Pentaerythrit-Stearinsäure. Derartige Gleit- oder Trennmittel können im Rahmen der vorliegenden Erfindung sowohl einzeln, als auch in Kombination miteinander, sowie auch in Kombination mit dem oben genannte Calcium-, Magnesium- oder Aluminiumsalzen eingesetzt werden.

Im Hinblick auf Beispiele für geeignete **Verbindungen d17)** sei ausdrücklich auf Seite 29, Zeile 20 bis Seite 30, Zeile 26, der oben zitierten EP-A-768 336 verwiesen. Die dort genannten **Weichmacher** werden in die Offenbarung der vorliegenden Erfindung ausdrücklich mit einbezogen.

Im Hinblick auf Beispiele für geeignete **Verbindungen d18)** sei ausdrücklich auf Seite 30, Zeile 28 bis Seite 30, Zeile 35, der oben zitierten EP-A-768 336 verwiesen. Die dort genannten **Pigmente** werden in die Offenbarung der vorliegenden Erfindung ausdrücklich mit einbezogen. Titandioxid ist als Pigment d18) bevorzugt.

Im Hinblick auf Beispiele für geeignete **Verbindungen d19)** sei ausdrücklich auf Seite 30, Zeile 37 bis Seite 30, Zeile 43, der oben zitierten EP-A-768 336 verwiesen. Die dort genannten **Füllstoffe** werden in die Offenbarung der vorliegenden Erfindung ausdrücklich mit einbezogen. Bei den Füllstoffen d19) sind Calciumcarbonat (Kreide), Talkum, Kaolin und dergleichen bevorzugt. Kreide ist dabei ganz besonders bevorzugt.

Im Hinblick auf Beispiele für geeignete **Verbindungen d20)** sei ausdrücklich auf Seite 30, Zeile 45 bis Seite 31, Zeile 3, der oben zitierten EP-A-768 336 verwiesen. Die dort genannten **Phosphite** werden in die Offenbarung der vorliegenden Erfindung ausdrücklich mit einbezogen.

Im Hinblick auf Beispiele für geeignete **Verbindungen d21)** sei ausdrücklich auf Seite 31, Zeile 5 bis Seite 31, Zeile 19, der oben zitierten EP-A-768 336 verwiesen. Die dort genannten **Thiophosphite und Thiophosphate** werden in die Offenbarung der vorliegenden Erfindung ausdrücklich mit einbezogen.

Im Hinblick auf Beispiele für geeignete **Verbindungen d22)** sei ausdrücklich auf Seite 31, Zeile 21 bis Seite 31, Zeile 25, der oben zitierten EP-A-768 336 verwiesen. Die dort genannten **Mercaptocarbonsäureester** werden in die Offenbarung der vorliegenden Erfindung ausdrücklich mit einbezogen.

Im Hinblick auf Beispiele für geeignete **Verbindungen d23)** sei ausdrücklich auf Seite 31, Zeile 27 bis Seite 31, Zeile 32, der oben zitierten EP-A-768 336 verwiesen. Die dort genannten **epoxidierten Fettsäureester** werden in die Offenbarung der vorliegenden Erfindung ausdrücklich mit einbezogen.

Im Hinblick auf Beispiele für geeignete **Verbindungen d24)** sei ausdrücklich auf Seite 33, Zeile 6 bis Seite 34, Zeile 7, der oben zitierten EP-A-768 336 verwiesen. Die dort genannten **UV-Absorber und Lichtschutzmittel** werden in die Offenbarung der vorliegenden Erfindung ausdrücklich mit einbezogen.

Im Hinblick auf Beispiele für geeignete **Verbindungen d25)** sei ausdrücklich auf Seite 35, Zeile 9 bis Seite 35, Zeile 12, der oben zitierten EP-A-768 336 verwiesen. Die dort genannten **Treibmittel** werden in die Offenbarung der vorliegenden Erfindung ausdrücklich mit einbezogen.

Im Hinblick auf **Verbindung d26)** sei angemerkt, daß es sich hier um **Harnstoff** handelt und mithin um eine dem Fachmann bekannte Substanz definierter Struktur.

Bei den **Verbindungen d27)** handelt es sich um **Metallseifen,** insbesondere Seifen der Metalle Zink, Magnesium, Calcium, Aluminium, Blei, Barium, Zinn und Cadmium.

Bei den organischen Zinkverbindungen mit einer Zn-O-Bindung handelt es sich um Zinkenolate oder/und Zinkcarboxylate. Letztere sind z.B. Verbindungen aus der Reihe der aliphatischen gesättigten C₂₋₂₂-Carboxylate, der aliphatischen ungesättigten C₃₋₂₂-Carboxylate, der aliphatischen C₂₋₂₂-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder C₁₋₁₆-alkylsubstituierten Phenylcarboxylate, der Phenyl-C₁₋₁₆-alkylcarboxylate, oder der gegebenenfalls mit C₁₋₁₂-Alkyl substituierten Phenolate, oder der Abietinsäure.

Namentlich zu erwähnen sind, als Beispiele, die Zinksalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6, 9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Zinksalze der divalenten Carbonsäuren bzw. deren Monoester, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Milchsäure, Malonsäure, Maleinsäure, Weinsäure, Zimtsäure, Mandelsäure, Äpfelsäure, Glykolsäure, Oxalsäure, Salicylsäure, Polyglykol-dicarbonsäure (Oligomerisierungsgrad des Polyglykols vorzugsweise im Bereich von 10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie ferner sogenannte überbasische (overbased) Zinkcarboxylate.

Bei den Zink-Enolaten handelt es sich bevorzugt um Enolate des Acetylacetons, des Benzoylacetons, des Dibenzoylmethans sowie um Enolate der Acetessig- und Benzoylessigester sowie der Dehydroacetsäure. Außerdem können auch anorganische Zinkverbindungen wie Zinkoxid, Zinkhydroxid, Zinksulfid oder Zinkcarbonat zum Einsatz kommen.
Bevorzugt sind Zinkcarboxylate einer Carbonsäure mit 7 bis 25 C-Atomen (Zinkseifen), wie beispielsweise Benzoate oder Alkanoate, bevorzugt C8-Alkanoate, Stearat, Oleat, Laurat, Palmitat, Behenat, Versatat, Hydroxystearate, Dihydroxystearate, p-tert.-Butylbenzoat, oder (Iso)octanoat. Besonders bevorzugt sind Stearat, Oleat, Versatat, Benzoat, p-tert-Butylbenzoat und 2-Ethylhexanoat.
Außer den genannten Zink-Verbindungen kommen auch organische Aluminium-, Cer- oder Lanthanverbindungen in Frage, die eine Metall-O-Bindung aufweisen. Zu den verwendbaren und bevorzugten Aluminium-Verbindungen gehören Carboxylate und Enolate.

Bei den **Verbindungen d28)** handelt es sich um **Antistatika.** Wie dem Fachmann bekannt, unterscheidet man bei den Antistatika äußere und innerer Antistatika. Äußere Antistatika sind Produkte, die auf PVC-Formteile als dünne Schicht auf die Oberfläche aufgebracht werden. Der Nachteil dieses Oberflächenauftrages ist die geringe Beständigkeit des antistatischen Effektes, so daß die Schutzwirkung mit der Zeit nachläßt und vor allem nach einem Spülen und Waschen eine Nachbehandlung erforderlich ist. Innere Antistatika sind Bestandteil des PVC-Compounds und werden zusammen mit anderen Additiven dem PVC zugemischt. Der entscheidende Vorteil der inneren Antistatika ist der durch sie erzielbare Dauereffekt.
Beispiele für geeignete Antistatika sind quartäre Ammoniumsalze, Aminderivate wie ethoxylierte Amine und spezieller Phosphorsäureester, ferner hygroskopische Substanzen wie Glycerin, Glykol und anderer Polyole.

Ein weiterer Erfindungsgegenstand ist ein **Verfahren** zur Stabilisierung von chlorhaltigen organischen Kunststoffen, insbesondere PVC, gegen thermischen und/oder photochemischen Abbau, wobei man den Kunststoffen, ein oder mehrere Fluoralkansulfonsäuren, insbesondere in Form von deren Alkalimetallsalzen, zusetzt. Vorzugsweise werden die Komponenten, also das ausgerüstete PVC und die Fluoralkansulfonsäuren in dafür geeigneten Apparaturen innig vermischt. Zweckmäßig kann die Einarbeitung der erfindungsgemäßen StabilisatorZusammensetzungen nach folgenden Methoden erfolgen:
- als Emulsion oder Dispersion (Eine Möglichkeit ist z.B. die Form einer pastösen Mischung. Ein Vorteil der erfindungsgemäßen Kombination besteht bei dieser Darreichungsform in der Stabilität der Paste.);
- Als Trockenmischung während des Vermischens von Zusatzkomponenten oder Polymermischungen;
- durch direktes Zugeben in die Verarbeitungsapparatur (z.B. Kalander, Mischer, Kneter, Extruder und dergleichen) oder
- als Lösung oder Schmelze.

Ein weiterer Gegenstand der Erfindung ist ein **PVC**, das einen Gehalt an ein oder mehreren Fluoralkansulfonsäuren aufweist. Ein solches stabilisiertes PVC kann auf an sich bekannte Weise hergestellt werden, wozu man unter Verwendung an sich bekannter Vorrichtungen wie der oben genannten Verarbeitungsapparaturen die Fluoralkansulfonsäuren bzw. eine erfindungsgemäße Stabilisatorkombination sowie gewünschtenfalls weitere übliche Kunststoffadditive mit PVC vermischt.

Vorzugsweise enthält das stabilisierte PVC die Fluoralkansulfonsäuren in einer Menge von 0,001 bis 2,0 phr und insbesondere 0,01 bis 0,5 phr. Der dem Fachmann geläufige Ausdruck phr ("parts per hundred resin") gibt an, wieviele Gewichtsteile einer Komponente im PVC - bezogen auf 100 Gewichtsteile PVC - vorhanden sind.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem Plastisol-Verfahren.

Extrusion und Spritzguß sind dabei als Verfahren zur Verarbeitung des erfindungsgemäß stabilisierten PVC besonders bevorzugt.

Das erfindungsgemäß stabilisierte PVC eignet sich für Hart-, Halbhart- und Weich-Rezepturen.

### Chlorhaltige organische Kunststoffe

Bei den chlorhaltigen organischen Kunststoffen, die es mit den Fluoralkansulfonsäuren bzw. den erfindungsgemäßen StabilisatorZusammensetzungen zu stabilisieren gilt, handelt es sich insbesondere um chlorhaltige Polymere oder deren Recyclate. Beispiele für solche zu stabilisierenden chlorhaltigen Polymere oder deren Recyclate sind: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Polymere des Ethylens; Polymere und nachchlorierte Polymere von Chlorbutadiens und deren Copolymere mit Vinylchlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Im Rahmen dieser Erfindung sind unter PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin kommen auch Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren und Initiatorreste.

### Beispiele

### Zu den eingesetzten Substanzen

Evipol SH 6030 = S-PVC (k-Wert = 60)
Omyalithe 95 T = Kreide
Zeolith A
Dipentaerythrit
Magnesiumstearat
Trifluormethansulfonsäure, Na-Salz
Dimethylaminouracil (gemäß Formel in der Beschreibung) als handelsübliches Produkt
N,N'-Dimethyl-N-cyanacetylharnstoff = handelsübliche Substanz

### Beispiele 1 bis 8

In der untenstehenden Tabelle 1 wurden einerseits die einzelnen Rezepturbestandteile der untersuchten Prüfrezepturen angegeben, andererseits die ermittelten Prüfergebnisse dargestellt. In der ersten Zeile der Tabelle sind die jeweiligen Nummern der Beispiele angegeben. Die Mengenanteile der einzelnen Komponenten sind in phr angegeben; phr bedeutet dabei "part per hundred resin" und gibt an, wieviele Gewichtsteile der jeweiligen Komponente nach der Zugabe der Zusammensetzung im PVC - bezogen auf 100 Gewichtsteile PVC - vorhanden sind. Dementsprechend enthalten die Rezepturen jeweils 100 Teile PVC (Evipol SH 6030).
Die Beispiele 2 und 4 sowie 6 bis 8 sind erfindungsgemäß. Die Beispiele 1, 3 und 5 dienen dem Vergleich.

Bei den Prüfrezepturen wurden - teilweise oder vollständig - folgende Messungen durchgeführt:
- **Stabilitätstest bei thermischer Belastung:** Entsprechend den Rezepturen wurden Walzfelle hergestellt und die statische Thermostabilität bei 180°C bestimmt. Die Herstellung der Walzfelle erfolgte, indem man die PVC-Pulvermischung und die genannten Rezepturkomponenten auf einem Laborwalzwerk 5 Minuten lang bei 170 °C homogenisierte und plastifizierte. Aus den so hergestellten etwa 0,5 mm dicken Walzfellen wurden Teststücke (Prüfkörper) der Größe von 17 x 17 mm herausgeschnitten. Die Prüfkörper wurden bei 180 °C im Wärmeschrank auf Glasplatten auf rotierenden Horden plaziert und in 15-minütigen Abständen wieder entnommen, bis alle Proben "verbrannt" waren (d.h. Schwarzfärbung erreicht hatten)
- **Farbmessung am Walzfell:** Darüber hinaus wurde bei den Walzfellen zur weiteren Charakterisierung die dem Fachmann bekannte L*,a*,b*-Methode (vergleiche DIN 6174) herangezogen. Der L-Wert gibt dabei die Helligkeit an. Bei den Messungen kam ein handelsübliches Gerät mit der Bezeichnung "Micro Color" (Firma Dr. Lange) zum Einsatz.
- **Stabilitätstest nach der Kongorot-Methode:** Weiterhin wurden bei den Walzfellen zur weiteren Charakterisierung die dem Fachmann bekannte Kongorot-Methode gemäß der Euro-Norm EN 60811-3-2:1995 Abs.9 herangezogen. Hierzu wurden von den Walzfellen jeweils kleine Proben (50 ±5 mg) entnommen und in den entsprechenden Glasröhrchen in einem Metallblock auf 200°C ( ±0.5 °C) erwärmt. In das obere Ende des Glasröhrchen wurde ein Streifen Universalindikatorpapier eingeführt. Die Zeit, bis die Farbe des Indikatorpapiers gerade nach rot umschlug, wurde in Minuten gemessen.

**Tabelle 1:**

| | **1** | **2** | **3** | **4** | **5** | **6** | **7** | **8** | |
|---|---|---|---|---|---|---|---|---|---|
| **Rezepturen - Angabe der Bestandteile in phr** | | | | | | | | | |
| Evipol SH 6030 | 100 | 100 | 100 | 100 | 100 | 100 | 100 | 100 | |
| Omyalithe 95 T | 3 | 3 | 3 | 3 | 3 | 3 | 3 | 3 | |
| Zeolith A | 0,84 | 0,84 | 0,84 | 0,84 | 0,84 | 0,84 | 0,84 | 0,84 | |
| Magnesiumstearat | 0,4 | 0,4 | 0,4 | 0,4 | 0,4 | 0,4 | 0,4 | 0,4 | |
| Dipentaerythrit | 0,33 | 0,33 | - | - | - | - | - | - | |
| Dimethylaminouracil | - | - | 0,3 | 0,3 | - | - | - | - | |
| N,N'-Dimethyl-N-cyanacetylhamstoff (*) | - | - | - | - | 0,33 | 0,33 | 0,33 | 0,33 | |
| Trifluormethansulfonsäure, Na-Salz | - | 0,05 | - | 0,1 | - | 0,002 | 0,013 | 0,05 | |

| **Farbmessung am Walzfell - Helligkeit \[L]** | | | | | | | | | |
|---|---|---|---|---|---|---|---|---|---|
| ungelagert | 67 | 79 | 80 | 78 | 80 | 80 | 80 | 80 | |
| 15 min. bei T=180 °C | 26 | 67 | 75 | 73 | 75 | 74 | 77 | 75 | |
| 30 min bei T= 180 °C | | 55 | 66 | 69 | 46 | 66 | 69 | 72 | |

| **Stabilitätsende** **nach Lagerung im Ofen (T=180 °C)** | | | | | | | | | |
|---|---|---|---|---|---|---|---|---|---|
| [min] | 15 | 75 | 45 | 60 | 45 | 60 | 60 | 90 | |

| **Stabilitätsende** **gemäß Kongorot (T=200 °C)** | | | | | | | | | |
|---|---|---|---|---|---|---|---|---|---|
| [min] | 13 | 17 | 9 | 14 | 12 | 14 | 17 | 19 | |

## Patentansprüche

1. Verwendung von Fluoralkansulfonsäuren zur Stabilisierung von chlorhaltigen organischen Kunststoffen gegen thermischen und/oder photochemischen Abbau.

2. Verwendung nach Anspruch 1, wobei die Fluoralkansulfonsäuren eine Sulfonsäuregruppe pro Molekül enthalten.

3. Verwendung nach Anspruch 1 oder 2, wobei die Fluoralkansulfonsäuren vollständig fluorierte Alkansulfonsäuren mit 1 bis 18 C-Atomen pro Molekül sind.

4. Verwendung nach einem der Anspüche 1 bis 3, wobei die Fluoralkansulfonsäuren in Form ihrer Salze eingesetzt werden.

5. Verwendung nach einem der Anspüche 1 bis 3, wobei man als Fluoralkansulfonsäure, Trifluormethansulfonssäure als solche oder in Form ihrer Salze, einsetzt.

6. Stabilisatorzusammensetzungen zur Stabilisierung von chlorhaltigen organischen Kunststoffen gegen thermischen und/oder photochemischen Abbau, **dadurch gekennzeichnet, daß** diese Zusammensetzungen ein oder mehrere Fluoralkansulfonsäuren enthalten.

7. Verfahren zur Stabilisierung chlorhaltiger organischer Kunststoffe, wobei man diesen Kunststoffen eine Stabilisator-Zusammensetzung mit einem Gehalt an ein oder mehreren Fluoralkansulfonsäuren zufügt und die Komponenten in dafür geeigneten Apparaturen innig vermischt.

## Claims

1. Use of fluoroalkane sulphonic acids for stabilising organic plastics containing chlorine against thermal and/or photochemical decomposition.

2. Use according to Claim 1, wherein the fluoroalkane sulphonic acids contain one sulphonic acid group per molecule.

3. Use according to Claim 1 or 2, wherein the fluoroalkane sulphonic acids are fully fluorinated alkane sulphonic acids with 1 to 18 C-atoms per molecule.

4. Use according to any one of Claims 1 to 3, wherein the fluoroalkane sulphonic acids are used in the form of their salts.

5. Use according to any one of Claims 1 to 3, wherein as fluoroalkane sulphonic acids use is made of trifluoromethane sulphonic acids as such or in the form of their salts.

6. Stabiliser compositions for stabilising organic plastics containing chlorine against thermal and/or photochemical decomposition, **characterised in that** these compositions contain one or more fluoroalkane sulphonic acids.

7. Method for stabilising organic plastics containing chlorine, wherein a stabiliser composition with a content of one or more fluoroalkane sulphonic acids is added to these plastics and the components are integrally mixed in suitable apparatus for this purpose.

## Revendications

1. Utilisation d'acides fluoroalcanesulfoniques pour la stabilisation de matières plastiques organiques contenant du chlore vis-à-vis d'une décomposition thermique et/ou photochimique.

2. Utilisation selon la revendication 1, où les acides fluoroalcanesulfoniques contiennent un groupe acide sulfonique par molécule.

3. Utilisation selon la revendication 1 ou 2, où les acides fluoroalcanesulfoniques sont des acides alcane-sulfoniques totalement fluorés ayant 1 à 18 atomes de carbone par molécule.

4. Utilisation selon l'une quelconque des revendications 1 à 3, où les acides fluoroalcanesulfoniques sont utilisés sous la forme de leurs sels.

5. Utilisation selon l'une quelconque des revendications 1 à 3, où on utilise en tant qu'acide fluoroalcanesulfonique, de l'acide trifluorométhane-sulfonique tel quel ou sous la forme de l'un de ses sels.

6. Compositions de stabilisation pour la stabilisation de matières plastiques organiques contenant du chlore vis-à-vis d'une décomposition thermique et/ou photochimique **caractérisées en ce que** lesdites compositions contiennent un ou plusieurs acides fluoroalcanesulfoniques.

7. Procédé pour la stabilisation de matières plastiques organiques contenant du chlore ou l'on ajoute, à ces matières plastiques une composition de stabilisation avec une teneur en un ou plusieurs acides fluoroalcanesulfoniques et les composants sont intimement mélangés dans un appareil approprié dans ce but.
